# EUROPÄISCHE PATENTANMELDUNG

(11) **EP 1 136 737 A1**
(43) Veröffentlichungstag der Anmeldung: **26.09.2001**
(21) Anmeldenummer: 00106235.5
(22) Anmeldetag: 22.03.2000
(51) Int. Cl.: F16K 31/06

(54) **Eletromagnetisch betätigbares Ventil**

(71) Anmelder: Siemens Building Technologies AG, 6300 Zug (CH)
(72) Erfinder: Greubel, Karl-Heinz, 8713 Uerikon (CH); Sprecher, Martin, 8713 Uerikon (CH); Pulli, Giuseppe, 8712 Stäfa (CH)

(57) **Zusammenfassung**

Ein Ventil (1) weist Durchlasskanälen (2,3) auf, welche auf einer gemeinsamen Rohrachse (A) angeordneten sind. Ein Schliesskörper (15) ist mit einem über eine Spule 17 elektromagnetisch ansteuerbaren Anker (18) starr gekoppelt und längs der Rohrachse (A) bewegbar. Eine störende Bewegung des Ankers (18), welche durch Druckstösse im Strömungsmedium hervorgerufen wird, wird durch Induktionswirkung selbsttätig gedämpft.

## Beschreibung

Die Erfindung bezieht sich auf ein Ventil der im Oberbegriff des Anspruchs 1 genannten Art.

Solche Ventile eignen sich beispielsweise als Absperr- und Drosselglieder in Rohrleitungen für flüssige oder gasförmige Medien, deren Durchflussmenge, Druck oder Wärmemenge gesteuert oder geregelt wird.

Derartige Ventile werden vorteilhaft in der Heizungs-, Lüftungs- und Klimatechnik oder in der Kältetechnik - beispielsweise auch als Expansionsventil in Kreisprozessen bei Wärmepumpen oder Kältemaschinen - verwendet.

Aus EP 124 821 A1 ist ein Ventil mit einem konischen Ventilsitz bekannt, bei dem die Anschlussrohre senkrecht zueinander angeordnet sind. Dadurch erfordert dieses Ventil eine Strömungsumlenkung, welche die Anwendungsmöglichkeit des Ventils einschränkt.

Ein Ventil der im Oberbegriff des Anspruchs 1 genannten Art ist aus der DE 43 32 831 A1 bekannt. Die Anschlussrohre dieses Ventils sind koaxial angeordnet, sodass durch die Stellung der Anschlussrohre keine Strömungsumlenkung erfolgt. Durch eine Ankerbewegung eines Elektromagneten wird ein Schliesskörper über ein Kniehebelsystem bewegt. Ein mechanisches Spiel des Kniehebelsystems hat bei Druckstössen im gesteuerten oder geregelten Medium entsprechende unerwünschte Volumenstromänderungen zur Folge, welche in gewissen Fällen gar einen schwingenden Ventilhub bewirken.

Der Erfindung liegt die Aufgabe zugrunde, ein Ventil zu schaffen, bei dem der Ventilhub bei Druckstössen im Strömungsmedium selbsttätig gedämpft wird.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

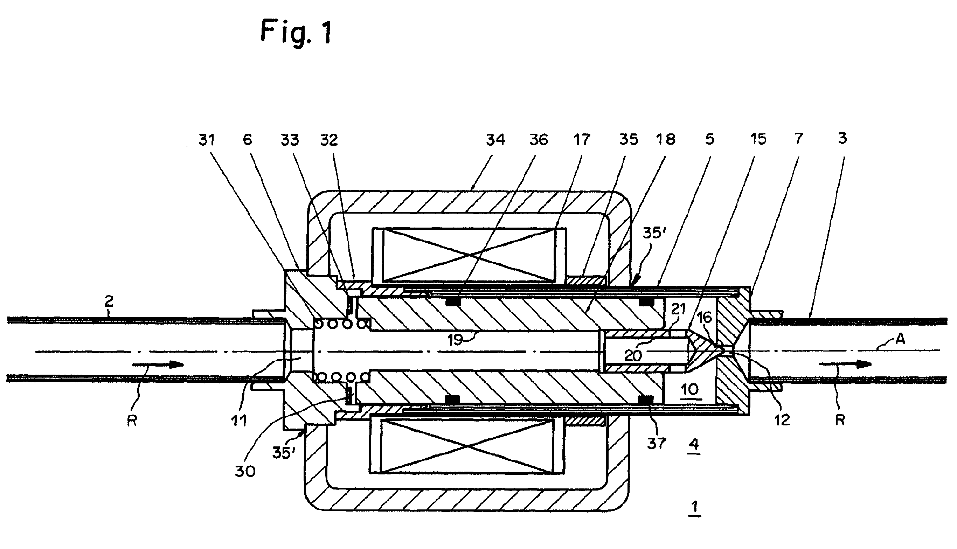

Es zeigt: Fig. 1 eine Schnittdarstellung eines elektromagnetisch stellbaren Ventils.

In der Fig. 1 bedeutet 1 ein zwischen einem ersten Anschlussrohr 2 und einem zweiten Anschlussrohr 3 angeordnetes Ventil. Die beiden Anschlussrohre 2 und 3 sind in ihren Anschlussbereichen zum Ventil 1 auf einer gemeinsamen Rohrachse A angeordnet. Das Ventil 1 weist ein gasdichtes Gehäuse 4 auf, mit dem die beiden Anschlussrohre 2 und 3 je nach Bedarf durch eine lösbare oder aber durch eine nicht lösbare Verbindungstechnik verbunden sind.

In einem funktionsgerechten und kostengünstigen Aufbau weist das Gehäuse 4 ein koaxial auf der Rohrachse A angeordnetes Druckrohr 5 und gegen das erste Anschlussrohr 2 hin ein erstes Abschlusselement 6 und gegen das zweite Anschlussrohr 3 hin ein zweites Abschlusselement 7 auf.

Das Gehäuse 4 umschliesst eine Ventilkammer 10, welche über eine erste, im ersten Abschlusselement 6 ausgebildete Öffnung 11 in das erste Anschlussrohr 2 und über eine zweite, im zweiten Abschlusselement 7 ausgebildete Öffnung 12 in das zweite Anschlussrohr 3 führt.

In der Fig. 1 ist eine Funktionsvariante dargestellt, bei der das Ventil 1 im Ruhezustand geschlossen ist, wobei ein im Gehäuse 4 längs der Rohrachse A verschiebbar angeordneter Schliesskörper 15 durch eine Schliesskraft auf einen an der zweiten Bohrung 12 ausgebildeten Ventilsitz 16 gedrückt wird.

In einem vorteilhaften Aufbau des Ventils 1 ist der Schliesskörper 15 wenigstens im Bereich des Ventilsitzes 16 konisch geformt, wobei zur Erreichung einer optimalen Ventilkennlinie die endgültige Form des Ventilsitzes 16 und/oder des Schliesskörpers 15 durch ein Einpressen des Schliesskörpers 15 in die Öffnung 12 des zweiten Abschlusselementes 7 ausgebildet ist.

Zur Betätigung des Ventils 1 ist der Schliesskörper 15 längs der Rohrachse A elektromagnetisch bewegbar, wobei die Bewegung des Schliesskörpers 15 über einen in einer Spule 17 fliessenden elektrischen Strom i steuerbar oder regelbar ist.

Das Ventil 1 weist einen durch die Spule 17 erregbaren magnetischen Kreis auf, in dem mit Vorteil im ersten Abschlusselement 6 ein magnetischer Pol generierbar ist, durch den ein Anker 18 elektromagnetisch bewegbar ist. In einem beispielhaften Aufbau des Ventils 1 ist der magnetisierbare Anker 18 ein gegen eine Federkraft bewegbarer Hohlzylinder, in dessen Durchgangsbohrung 19 der Schliesskörper 15 eingepresst ist. Durch die erwähnte Pressverbindung sind der Anker 18 und der Schliesskörper 15 spielfrei miteinander verbunden, wobei mit der Einpresstiefe der längs der Rohrachse A durchführbare gemeinsame Bewegungsspielraum des Ankers 18 und des Schliesskörpers 15 in gewissen Grenzen einstellbar ist.

Der Anker 18 und der Schliesskörper 15 sind derart ausgestaltet, dass sie von einem flüssigen oder gasförmigen Strömungsmedium innerhalb der Ventilkammer 10 durchströmbar sind, was beispielhaft durch die Durchgangsbohrung 19, ein an die Durchgangsbohrung 19 angeschlossenes und im Schliesskörper 15 ausgenommenes Sackloch 20 und eine mit dem Sackloch 20 verbundene, ebenfalls im Schliesskörper 15 angeordnete Querbohrung 21 verwirklicht ist.

Es versteht sich von selbst, dass der Anker 18 und der Schliesskörper 15 in weiteren, nicht dargestellten Ausführungsvarianten beispielsweise einstückig oder mehrstückig ausführbar sind.

Zwischen dem Anker 18 und dem ersten Abschlusselement 6 ist ein Luftspalt 30 angeordnet, der im Ruhezustand des Ventils 1 maximal und bei maximaler Aussteuerung des Ankers 18 minimal ist.

Beispielhaft ist eine Druckfeder 31 einerseits auf einer Stufe des ersten Abschlusselementes 6 und andererseits am Anker 18 abgestützt. Durch die Druckfeder 31 wird in der dargestellten Funktionsvariante auch die Schliesskraft des Ventils 1 mitbestimmt.

Zwischen dem Druckrohr 5 und dem ersten Abschlusselement 6 weist das Gehäuse 4 einen Druckring 32 auf, durch den das Gehäuse 4 im Bereich des Luftspalts 30 gasdicht abgeschlossen ist. Der Werkstoff des Druckrings 32 ist mit Vorteil nicht ferromagnetisch.

Durch die Ausgestaltung der Formen des ersten Abschlusselementes 6, des Ankers 18 und des Druckrings 32 insbesondere im Bereich des Luftspalts 30, wie auch durch die Wahl der Werkstoffe des magnetischen Kreises, sind das von dem elektrischen Strom i abhängige Verhalten des Ventils 1 in bekannter Art den Anforderungen anzupassen. Mit Vorteil wird der Luftspalt 30 durch das erste Abschlusselement 6 dünnwandig kurzgeschlossen. Vorteilhafterweise ist im Luftspalt 30 eine Distanzscheibe 33 aus einem nicht ferromagnetischen Material - beispielsweise aus Messing - angeordnet, welche einerseits ein magnetisches Haften des Ankers 18 am ersten Abschlusselement 6 verhindert und weiter als dämpfender Anschlag für den Anker 18 dient.

Bei stromdurchflossener Spule 17 bilden das Druckrohr 5, der Anker 18, der Luftspalt 30 und das erste Abschlusselement 6 einen magnetischen Kreis, der über ein Joch 34 geschlossen ist.

Es versteht sich von selbst, dass das Druckrohr 5, der Anker 18, das erste Abschlusselement 6 und das Joch 34 funktionsgerecht aus ferromagnetischen Werkstoffen sind.

Ein besonders kostengünstiger und funktionsgerechter Aufbau des Ventils 1 ist erreichbar, wenn die Spule 17, der Anker 18, der Schliesskörper 15 und das Gehäuse 4 wie in der Fig. 1 dargestellt rotationssymmetrisch um die Rohrachse A angeordnet und ausgeformt sind.

Das Joch 34 ist beispielhaft durch ein Rohrstück mit vierkantigem Querschnitt verwirklicht, welches Querbohrungen 35 und 35' zum Einschieben des Gehäuses 4 aufweist.

Die Spule 17 ist beispielhaft zwischen einer am Druckring 32 angeformten Stufe und einem zwischen dem Joch 34 und der Spule 17 angeordneten Distanzhülse 35 formschlüssig fixiert.

Zur Minimierung der mechanischen Reibung zwischen dem Anker 18 und dem Gehäuse 4 weist der Anker 18 beispielhaft Führungsringe 36 und 37 auf, welche zwischen dem Anker 18 und dem Druckrohr 5 angeordnet sind und beispielsweise aus Graphit oder aus Polytetrafluoräthylen sind.

Das Ventil 1, mit den auf der gemeinsamen Rohrachse A angeordneten Durchlasskanälen oder Rohren 2 und 3 und mit dem längs der Rohrachse A bewegbaren Schliesskörper 15, der mit dem Anker 18 starr gekoppelt und längs der Rohrachse A elektromagnetisch bewegbar ist, hat den Vorteil, dass eine störende Bewegung des Ankers 18, welche durch Druckstösse im Strömungsmedium hervorgerufen wird, durch Induktionswirkung selbsttätig gedämpft wird. Die vorteilhafte Wirkung ergibt sich durch ein elektromagnetisches System, welches die erregte Spule 17 und einen magnetischen Kreis aufweist, der den Luftspalt 30, den Anker 18 den magnetischen Pol bzw. das erste Abschlusselement 6 und das Joch 34 umfasst.

Sofern das Strömungsmedium in der eingezeichneten Durchflussrichtung R durch das Ventil 1 fliesst, wird ein durch Druckschwankungen im Strömungsmedium verursachter störender Ventilhub zudem selbsttätig korrigiert, indem der Hub des Ventils 1 bei steigendem Druck verkleinert und bei fallenden Druck vergrössert wird, was in diesem Fall bezüglich des Durchflusses selbstregulierend wirkt.

Grundsätzlich kann das Ventil 1 in beiden Durchflussrichtungen betrieben werden. Dies ist beispielsweise bei der Verwendung des Ventil 1 als Expansionsventil in Wärmepumpen von Vorteil, da hier oftmals die Durchflussrichtung gewechselt wird, jenachdem, ob an einem gewissen Wärmetauscher geheizt oder gekühlt werden soll. Bei derartigen Kreisprozessen kann auf ein zweites Expansionsventil wie auch auf Umwegleitungen und Absperrventile verzichtet werden, was erhebliche Kostenvorteile mit sich bringt.

In einer weiteren, in der Zeichnung nicht dargestellten Funktionsvariante ist das Ventil 1 im Ruhezustand offen. In dieser Ausführungsvariante ist ein Ventilsitz im ersten Abschlusselement 6 ausgebildet und dementsprechend der Schliesskörper 15 in der Durchgangsbohrung 19 des Ankers 18 gegen das erste Abschlusselement 6 hin eingepresst.

## Patentansprüche

1. Ventil mit auf einer gemeinsamen Rohrachse (A) angeordneten Durchlasskanälen (2,3), mit einem längs der Rohrachse (A) koaxial bewegbaren Schliesskörper (15), und mit einem elektromagnetisch bewegbaren Anker (18),
**dadurch gekennzeichnet,**
**dass** der Schliesskörper (15) mit dem Anker (18) starr gekoppelt ist und der Anker (18) längs der Rohrachse (A) bewegbar ist.

2. Ventil nach Anspruch 1, **gekennzeichnet durch** eine durch einen elektrischen Strom erregbare Spule (17), welche koaxial zur Rohrachse (A) angeordnet ist.

3. Ventil nach einem vorangehenden Anspruch, **dadurch gekennzeichnet, dass** die endgültige Form eines Sitzteils (7) und/oder des Schliesskörpers (15) durch ein Einpressen des Schliesskörpers (15) in eine Bohrung (12) des Sitzteils (7) ausgebildet ist.
